# EUROPEAN PATENT SPECIFICATION

(11) **EP 3 270 746 B1**
(45) Date of publication and mention of the grant of the patent: **08.11.2023**
(21) Application number: 16719508.0
(22) Date of filing: 18.03.2016
(51) Int. Cl.: A47J 31/36, A23F 5/08, B65D 85/804

(54) **SINGLE-DOSE UNIT OF COFFEE**
EINZELDOSISEINHEIT VON KAFFEE
UNITÉ DE DOSE UNIQUE DE CAFÉ

(30) Priority: 20.03.2015 IT BS20150047
(43) Date of publication of application: 24.01.2018
(73) Proprietor: LUCAFFE' SRL SOCIETA' BENEFIT, 25080 Padenghe sul Garda (BS) (IT)
(72) Inventor: VENTURELLI, Gian Luca, 25080 Padenghe Sul Garda (BS) (IT)
(74) Representative: Modiano, Micaela Nadia
(86) International application number: PCT/IB2016/051531
(87) International publication number: WO 2016/151449

(56) References cited:
- EP-A2- 0 398 524
- WO-A1-2010/076048
- CH-A- 495 138
- US-A- 6 068 871
- US-A1- 2010 239 717

## Description

### Field of the invention

In its most general aspect the present invention refers to the field of coffee prepackaged in unitary doses to be used in coffee machines and, in particular, it refers to a single-dose unit of powdered coffee, such as a coffee pod or coffee capsule.

### State of the art

As known, recently the consumption of powdered coffee prepackaged in unitary doses, such as pods or capsules to be used in apposite coffee machines and sometimes also in conventional coffee machines, is become popular.

Generally, capsules are differentiated by the pods basically for the container type in which a preset amount of powdered coffee is contained and enclosed.

As a rule, capsules comprise a rigid or semi-rigid container, for example made of aluminium or plastic, that in use is pierced to allow the water to percolate through the powdered coffee, obtaining the desired coffee-based beverage.

On the contrary, pods comprise a wrap of floppy type usually constituted by fabric or filter paper, which in use is not pierced as the water percolation occurs also through the wrap.

In particular, the known art provides for pods and capsules of the above mentioned type of different shapes that, although meeting the purposes, are not free from drawbacks.

The main drawback of known coffee pods and capsules is the particularly high cost they have on the market, only partially due to the presence of wrap or disposable container, whereas the great coffee amount contained in the unitary dose puts a strain on it, being usually comprised between 7 and 8 grams.

As a matter of fact, according to known art an amount of powdered coffee comprised between 7 and 8 grams is the standard in single-dose unit, in particular to obtain a cup coffee (espresso) having the features the market requires and the user appreciates.

WO 2010/076048 A1 disclose a capsule for use in a beverage production machine comprising a first wall member, a second perforable wall member tightly attached to the first wall member, at least one porous layer between the ingredients in the capsule and the second wall member; wherein the porous layer forms with the perforable nonporous second wall member a multilayer laminate, wherein the porous member controls the flow in the capsule providing a faster and more consistent flow of the liquid extract through the capsule and significantly reducing the resurgence of non-soluble solids.

US 6,068,871 A discloses a powdered substance which is suitable for preparation of a beverage with an extraction fluid and which is compacted in a form of a cake contained within a sachet, wherein the sachet comprises two sachet sheets with sealed edges which, prior to extraction of the substance, protect the substance against oxygen and water vapor, wherein in effecting the extraction one sheet is perforated to provide at least one opening for injection of the extraction fluid under pressure into the sachet and the other sheet is deformed against a surface having portions forming local breakages for opening the deformed sheet to the flow of the extracted beverage substance, wherein the cake and sheets are configured so that there is free space between at least one of the cake surfaces and one sheet for allowing the substance to expand between the sheets.

EP 0 398 524 A2 discloses a cassette for producing coffee by the cup or pot and for use with a liquid receptacle having an internal locking flange, wherein the cassette comprises a ring defining an interior and forming a bottom annular groove to receive the locking flange of the liquid receptacle and thereby to hold the cassette in place therein, and wherein the cassette further includes a plurality of ribs connected to and extending across the ring and separating the interior thereof into a multitude of sections, and coffee particles disposed in said sections, wherein a bottom filter and a top filter are secured to the ring and extend across the bottom and top, respectively, of the interior of the ring to hold the flavoring particles therein.

US 2010/239717 A discloses a capsule for the production of a beverage in a beverage production machine comprising a capsule holder with relief and recessed elements, wherein the capsule includes an inverted cup-shaped body forming a chamber containing beverage ingredients; a bottom injection wall; a sidewall; and a delivery wall which is sealed to the body, wherein the delivery wall is configured and dimensioned to include a calibrated orifice or perforating means to provide a calibrated orifice with the beverage delivery wall not being tearable against the capsule holder during extraction, and wherein the wall also provides through the restriction created by the calibrated orifice a certain back pressure which generates an elevated pressure in the capsule during extraction.

### Summary of the invention

The technical problem underlying the present invention was to provide a single-dose unit of coffee having structural and functional characteristics such to overcome the afore mentioned drawbacks referring to the known art and, in particular, a single-dose unit of coffee containing a blend of powdered coffee, particularly efficient and cost effective but able to assure obtaining a respective cup coffee having characteristics at least equal, if not even higher, to those of a cup coffee obtained through coffee pods and capsules according to the known art.

According to the invention, the afore said problem is solved by a single-dose unit of coffee as set out in claim 1.

In essence, according to the invention, a single-dose unit of coffee is provided and has at least one of the afore said values of statistic median, statistic mean and statistic mode, the most preferred of which is a value of statistic median equal to about 277 pm.

Therefore, the single-dose unit according to the present invention according to the invention comprises powdered coffee essentially constituted by particles having a grain size comprised between 10 µm and 500 µm.

In this way, the capacity of water percolation into the powdered coffee is enhanced, in particular during the preparation of a so-called espresso coffee, with an increase of the solute in the espresso cup, ceteris paribus, as it will be better evident in the following.

Without wishing to be bound to any scientific theory, it is believed that the afore said grain size or granulometric distribution of powdered coffee of the present single-dose unit, allows the essential oils of coffee, therefore nutritional and aromatic fatty substances contained in coffee beans, to migrate more easily and in greater amount next to the high surface area of granules of powdered coffee, in particular during grinding of coffee beans.

In particular, the fatty substances contained in coffee beans at the typical grinding temperature equal to or higher than 40°C, are sufficiently fluid to flow and cover the surface micro-fissures of the particles of powdered coffee whereas, at lower temperatures, then before and after the grinding, the fatty substances are essentially at the semi-solid state. This causes a variation of cohesive properties of powdered coffee and affects the percolation step, in particular by increasing the hydraulic resistance of powdered coffee vs. percolation water. Consequently, the contact time between percolation water and powdered coffee is increased and, therefore, the solute in the cup is increased too.

Therefore, such a better and greater migration of essential oils onto the surface of granules of powdered coffee has an advantageous effect in different aspects, among which a better efficiency of the percolation step the powdered coffee undergoes when being consumed, in particular in order to achieve the desired coffee beverage, for example the afore said espresso coffee.

Therefore, in accordance with the invention, also a method for obtaining a coffee-based beverage, the so-called cup coffee or espresso, is provided and comprises the steps of:
- providing a single-dose unit of powdered coffee of the afore said type;
- in case, removing the afore said outer wrap;
- arranging the afore said single-dose unit of powdered coffee in a chamber of a coffee apparatus, wherein the afore said chamber has at least one inlet arranged upstream of the afore said single-dose unit of coffee and an outlet arranged downstream of the afore said single-dose unit of coffee, for a preset fluid respectively coming in and out of the afore said chamber;
- feeding a water flow in the afore said chamber containing the afore said single-dose unit, in case after the afore said single-dose unit of coffee have been pierced;
- collecting a liquid water flow (percolate) coming out of the afore said chamber;
- wherein the afore said water flow is fed in the afore said chamber containing the afore said single-dose unit of coffee for a time interval equal to or lower than 20 seconds, preferably equal to or lower than 18 seconds, more preferably equal to about 15 seconds.

Preferably, the afore said water flow is fed in the afore said chamber containing the afore said single-dose unit of coffee with a temperature equal to or lower than 96°C, preferably equal to about 95°C.

Preferably, the afore said water flow is fed in the afore said chamber containing the afore said single-dose unit of coffee with a pressure greater than or equal to 17 bars, preferably equal to about 20 bars.

Therefore, in accordance with the disclosure, but not part of the invention, also a process of grinding coffee beans is provided and comprises at least one step of grinding the coffee beans, wherein in the afore said grinding step powdered coffee is obtained with a granulometric distribution having at least one among statistic median, statistic mean and statistic mode, one independently from another, with a value lower than 450 pm, preferably lower than 400 pm, more preferably lower than 350 pm, still more preferably lower than or equal to about 300 pm, still more preferably lower than or equal to about 280 pm, still more preferably comprised between about 275 µm and about 278 µm.

### Brief Description of the Figures

Further characteristics and advantages of the invention will be more evident from a review of the following description of some preferred, but not exclusive, embodiments shown for illustration purposes only and without limitation, with the aid of the attached drawings, in which:
- figure 1 depicts a graph relating to the granulometric distribution of a blend of powdered coffee of a single-dose unit of coffee according to the present invention;
- figure 2 depicts a graph relating to the granulometric distribution of a blend of powdered coffee of a single-dose unit of coffee according to the known art;
- figure 3 depicts the graph of figure 1 with respect to that of figure 2.

### Definitions

In the scope of the present invention the expressions "powdered coffee", "blend of coffee", "blend of powdered coffee" and "coffee powder" are interchangeable and denote the product obtained during grinding the coffee beans.

In the scope of the present invention the term "percolation" denotes the process by which aromatic-nutrient substances contained in the coffee are obtained by passing a liquid, usually water, through a blend of powdered coffee at a given pressure.

In the scope of the present invention the expressions "coffee-based beverage", "cup coffee", "espresso coffee" and "espresso" are interchangeable and denote the product obtained by percolation of a liquid (percolate), usually water, through a blend of powdered coffee.

### Detailed description of the invention

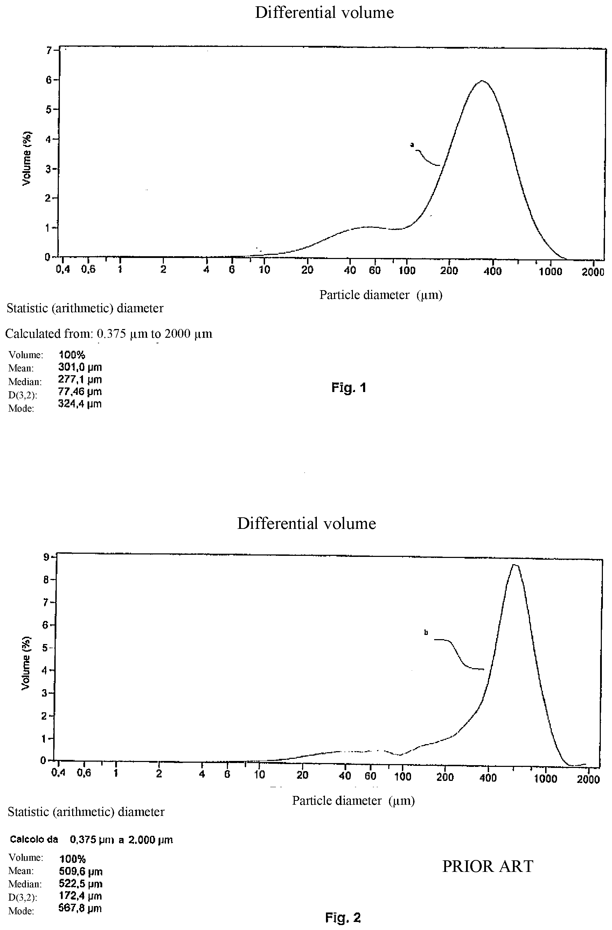

Referring to figure 1, a graph of the granulometric distribution of a blend of powdered coffee of a single-dose unit of coffee according to the present invention is depicted.

In particular, the graph of the example of figure 1 is a differential curve denoted with **a,** relating the diameter, or anyway the width, of the granules of powdered coffee with the volume they take up in the blend of powdered coffee, in single-dose unit of coffee according to the present invention, in particular a pod containing 5.97 grams of coffee.

With the term pod it is herein intended a single-dose unit of coffee in which the coffee powder is contained in a floppy container of the type of a bag made of fabric or filter paper.

Measurements on granules of the blend of powdered coffee, carried out with optical model, in particular optical refractometry and Fraunhofer instrument rf780z, spanned a size range comprised between 0.375 µm and 2000 pm, resulting in a value of 277.1 µm for the statistic median, a value of 324.4 µm for the statistic mode and a value of 301.0 µm for the statistic mean, therefore a size of hypothetical spherical granules of the coffee powder equal to 77.46 pm, denoted in figure 1 as D(3, 2).

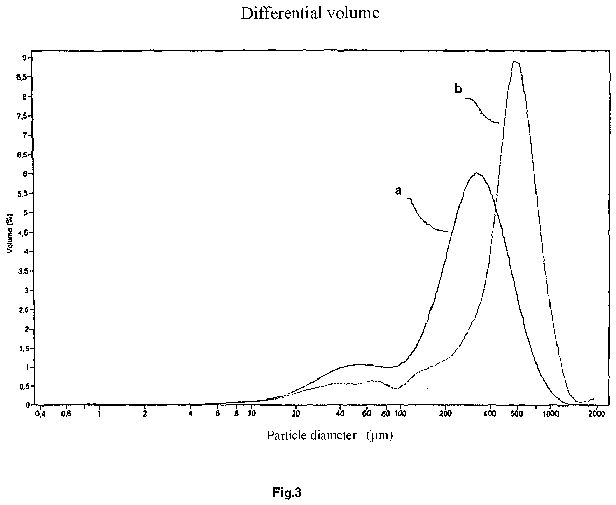

In accordance with the invention, the grain size of coffee powder of the present single-dose unit of coffee is therefore particularly fine, and exceptionally fine if compared to grain size of coffee powder of a single-dose unit according to the known art, as it can be noticed from examples of Figures 2 and 3.

In detail, in the example of figure 2, it can be noticed that a sample of coffee powder of a single-dose unit of coffee according to the known art, especially a pod ILLY 100% Arabica containing 7.42 grams of coffee and available on the market, has a granulometric distribution having a value of statistic median equal to 522.5 pm, a value of static mode equal to 567.8 µm and a value of statistic mean equal to 509.6 pm, always calculated with the optical model, in particular with optical refractometry and Fraunhofer instrument rf780z, still for measurements comprised between 0.375 µm and 2000 pm, as the respective differential curve denoted with **b** depicts.

In this case, the size of hypothetical spherical granules of powdered coffee is equal to 172.4 pm, denoted in figure 2 with D(3, 2).

The fine grain size of the powdered coffee of the single-dose unit according to the present invention is particularly advantageous since it allows a shorter percolation time, through a smaller amount of powdered coffee, with respect to percolation time and powdered coffee amount in accordance with the single-dose units of coffee provided by the known art, in order to have respective cup coffees with solubility characteristics essentially similar, if not even higher in case of the single-dose unit according to the present invention.

In particular, it is possible to obtain a cup coffee, per single-dose unit of coffee according to the present invention, for example a pod of the above considered type with reference to figure 1, having essentially the same characteristics, among which solubility, of a cup coffee obtained from a pod of the type of that one considered above with reference to figure 2, in about 15 secs. (percolation time), against 25-30 secs necessary in the known art.

Also the temperature for obtaining an espresso with a single-dose unit according to the present invention is advantageously lower than the temperature used by employing a single-dose unit according to the known art and, precisely with reference to the pods of the examples of the afore said figures, in the first case there is a temperature of 95°C against a temperature of 98°C in the second case, to have comparable cup coffees.

Still regarding the grain size, it has to be said that for the values in accordance with the present invention and for a grinding temperature of coffee beans about 40°C, essential oils that are more fluid and contained in the coffee beans are able to migrate in great amount on the increased surface area provided by the granules of powdered coffee, then making the percolation more convenient and efficient in terms of extraction of nutritional and aromatic substances contained in coffee.

What above becomes a considerable coffee saving per single-dose unit of coffee according to the invention with respect to the coffee amount contained in the single-dose units in accordance with the known art, that could come close also to 30% by weight.

A considerable lower amount of powdered coffee in the single-dose unit of coffee according to the present invention further turns into a respective container for powdered coffee with little size and weight and, in case of pod, also into an outer wrap for containing and protecting the pod itself, being particularly light and advantageously having a weight of about 0.8 grams and, therefore, convenient to be carried and to be preferred due to a lower environmental impact.

Furthermore, a little content of coffee in a single-dose unit of coffee according to the present invention allows obtaining an espresso coffee that, the other features being the same, contains less caffeine and therefore is less bitter and more pleasant for the consumer.

## Claims

1. A single-dose unit of coffee in pod comprising a floppy container and a preset amount of powdered coffee contained in said floppy container, **characterized in that** said floppy container is a bag made of fabric or filter paper and said powdered coffee has a granulometric distribution having at least one among statistic median, statistic mean and statistic mode, one independently from another, with a value comprised between about 275 µm and about 278 pm, said single-dose unit comprising an outer wrap containing said bag, wherein said outer wrap is a wrap sealed around said bag and removable from said bag, wherein said outer wrap has a weight equal to about 0.8 grams wherein said bag has circular shape, with a width of the portion containing the powdered coffee equal to about 35 mm, wherein said preset amount of powdered coffee is comprised between about 5 grams and about 5.8 grams, and wherein said powdered coffee is essentially constituted by particles having a grain size comprised between 10 µm and 500 µm.

2. A method of obtaining an espresso, comprising the steps of:
- providing a single-dose unit of powdered coffee in pod according to claim 1;
- removing said outer wrap;
- arranging said single-dose unit in a chamber of a coffee apparatus, wherein said chamber is provided with at least one inlet arranged upstream of said single-dose unit and at least one outlet arranged downstream of said single dose unit, for a preset fluid respectively coming in and out of said chamber; feeding a water flow in said chamber containing said single-dose unit;
- collecting a liquid water flow (percolate) coming out of said chamber; wherein said water flow is fed in said chamber containing said single-dose unit for a time interval equal to or lower than 20 seconds, preferably equal to or lower than 18 seconds, more preferably equal to about 15 seconds, and wherein said water flow is fed in said chamber containing said single-dose unit with a temperature equal 20 to or lower than 96°C, preferably equal to about 95°C.

3. The method according to claim 2, wherein said water flow is fed in said chamber containing said single-dose unit with a pressure greater than or equal to 17 bars, preferably equal to about 20 bars.

## Patentansprüche

1. Eine Einzeldosiseinheit Kaffee in einer Schale, die einen flexiblen Behälter und eine vordefinierte Menge Pulverkaffee umfasst, die in dem flexiblen Behälter enthalten ist, **dadurch gekennzeichnet, dass** der flexible Behälter eine Tüte aus Stoff oder Filterpapier ist und der Pulverkaffee eine granulometrische Verteilung hat, die mindestens eines von statistischem Median, statistischem Mittelwert und Statistikmodus, jeweils unabhängig voneinander, hat, mit einem Wert zwischen ungefähr 275 µm und ungefähr 278 µm, wobei die Einzeldosiseinheit eine äußere Verpackung umfasst, die die Tüte enthält, wobei die äußere Verpackung eine Verpackung ist, die um die Tüte herum versiegelt und von der Tüte abnehmbar ist, wobei die äußere Verpackung ein Gewicht gleich ungefähr 0,8 Gramm hat, wobei die Tüte eine Kreisform hat, wobei eine Breite des Abschnitts, der den Pulverkaffee enthält, gleich ungefähr 35 mm ist, wobei die vordefinierte Menge an Pulverkaffee zwischen ungefähr 5 Gramm und ungefähr 5,8 Gramm beträgt und wobei der Pulverkaffee im Wesentlichen aus Partikeln mit einer Korngröße zwischen 10 µm und 500pm besteht.

2. Ein Verfahren zur Zubereitung eines Espresso, das folgende Schritte umfasst:
- das Herstellen einer Einzeldosiseinheit von Pulverkaffee in einer Schale gemäß Anspruch 1;
- das Entfernen der äußeren Verpackung;
- das Anordnen der Einzeldosiseinheit in einer Kammer eines Kaffeezubereiters, wobei die Kammer mit mindestens einem Einlass ausgestattet ist, angeordnet stromaufwärts von der Einzeldosiseinheit, und mindestens einem Auslass, angeordnet stromabwärts von der Einzeldosiseinheit, für eine voreingestellte Flüssigkeit, die in die und aus der Kammer kommt; das Hineingeben eines Wasserstroms in die Kammer, die die Einzeldosiseinheit enthält;
- das Sammeln eines flüssigen Wasserstroms (Perkolats), der aus der Kammer kommt; wobei der Wasserstrom in die Kammer, welche die Einzeldosiseinheit enthält, für ein Zeitintervall von höchstens 20 Sekunden, vorzugsweise höchstens 18 Sekunden, stärker bevorzugt gleich ungefähr 15 Sekunden, hineingegeben wird und wobei der Wasserstrom in die Kammer, welche die Einzeldosiseinheit enthält, mit einer Temperatur gleich 20 oder niedriger als 96°C, vorzugsweise gleich ungefähr 95°C, hineingegeben wird.

3. Das Verfahren gemäß Anspruch 2, wobei der Wasserstrom in die Kammer, welche die Einzeldosiseinheit enthält, mit einem Druck von mindestens 17 bar, vorzugsweise gleich ungefähr 20 bar, hineingegeben wird.

## Revendications

1. Dose individuelle de café dans une capsule comprenant un contenant souple et une quantité prédéfinie de café moulu contenue dans ledit contenant souple, **caractérisée en ce que** ledit contenant souple est un sachet composé de tissu ou de papier filtre et ledit café moulu présente une granulométrie ayant au moins l'un d'une médiane statistique, d'une moyenne statistique et d'un mode statistique, indépendant les uns des autres, avec une valeur comprise entre environ 275 µm et environ 278 µm, ladite dose individuelle comprenant un emballage extérieur contenant ledit sachet, dans laquelle ledit emballage extérieur est un emballage enveloppé autour dudit sachet et qui peut être retiré dudit sachet, dans laquelle ledit emballage extérieur possède un poids égal à environ 0,8 gramme, dans laquelle ledit sachet possède une forme circulaire, avec une largeur de la partie qui contient le café moulu égale à environ 35 mm, dans laquelle ladite quantité prédéfinie de café moulu est comprise entre environ 5 grammes et environ 5,8 grammes, et dans laquelle ledit café moulu est essentiellement constitué de particules qui présentent une taille de grain comprise entre 10 µm et 500 pm.

2. Procédé d'obtention d'un espresso, comprenant les étapes consistant à :
- prévoir une dose individuelle de café moulu dans une capsule selon la revendication 1 ;
- retirer ledit emballage extérieur ;
- placer ladite dose individuelle dans une chambre d'une machine à café, dans lequel ladite chambre est équipée d'au moins une admission prévue en amont de ladite dose individuelle et au moins une évacuation prévue en aval de ladite dose individuelle, pour un liquide prédéfini qui entre et sort respectivement de ladite chambre ; fournir un écoulement d'eau dans ladite chambre qui contient ladite dose individuelle ;
- collecter un écoulement d'eau liquide (percolat) qui sort de ladite chambre ; dans lequel ledit écoulement d'eau est fourni dans ladite chambre qui contient ladite dose individuelle pendant une durée égale ou inférieure à 20 secondes, de préférence égale ou inférieure à 18 secondes, de préférence égale à environ 15 secondes, et dans lequel ledit écoulement d'eau est fourni dans ladite chambre qui contient ladite dose individuelle à une température égale ou inférieure à 96°C, de préférence égale à environ 95°C.

3. Procédé selon la revendication 2, dans lequel ledit écoulement d'eau est fourni dans ladite chambre qui contient ladite dose individuelle à une pression supérieure ou égale à 17 bar, de préférence égale à environ 20 bar.
